Europäisches Patentamt

European Patent Office

Office européen des brevets

(11) Veröffentlichungsnummer: **0 537 586 A1**

## (12) EUROPÄISCHE PATENTANMELDUNG

(21) Anmeldenummer: **92116987.6**

(22) Anmeldetag: **05.10.92**

(51) Int. Cl.5: **G01N 30/96**, B01J 39/08, B01J 45/00

(30) Priorität: **12.10.91 DE 4133806**

(43) Veröffentlichungstag der Anmeldung: **21.04.93 Patentblatt 93/16**

(84) Benannte Vertragsstaaten: **BE CH DE DK FR GB IT LI NL SE**

(71) Anmelder: **MERCK PATENT GESELLSCHAFT MIT BESCHRÄNKTER HAFTUNG Frankfurter Strasse 250 Postfach 4119 W-6100 Darmstadt(DE)**

(72) Erfinder: **Mack, Margot, Dr. 13, Gartenstrasse W-6149 Grasellenbach 1(DE)** Erfinder: **Müller, Werner, Dr. Giessener Strasse 4 W-6148 Heppenheim(DE)**

(54) **Borsäurekomplexe als stationäre Phase in der Flüssigkeitschromatographie.**

(57) Die Erfindung betrifft neuartige Kationenaustauscher für die Flüssigkeitschromatographie, die in einer hydroxylgruppenhaltigen Matrix Borsäure und/oder ihre Salze komplexiert enthalten. Weiterhin betrifft die Erfindung die Herstellung und Verwendung dieser Austauscher.

EP 0 537 586 A1

Rank Xerox (UK) Business Services
(3.10/3.5x/3.0.1)

Die Erfindung betrifft neuartige Ionenaustauscher für die Flüssigkeitschromatographie. Ionenaustauscher sind als stationäre Phase für die chromatographische Trennung von ionischen Analyten gebräuchlich. Kationenaustauscher bestehen aus Polyanionen. Sie enthalten als aktive Gruppen beispielsweise COOH, $SO_3H$ und $PO_4H_2$. Trägermaterialien für diese Gruppen sind in großer Zahl bekannt, dazu gehören Derivate beispielsweise von Zellulose, des Polystyrols, von vernetzten Dextranen, von Poly-(meth)-acrylsäure, von Kieselgelen.

Der Fachmann wählt aus dieser Vielzahl von Trennmaterialien entsprechend dem Trennproblem aus. Dabei kann oft allein durch geeignete Auswahl ein anstehendes Trennproblem gemeistert werden. Eine Erweiterung dieser Auswahlmöglichkeiten ist deswegen wünschenswert: Es werden neue Möglichkeiten aufgewiesen, neue oder bisher nicht befriedigend gelöste Trennprobleme zu lösen. Die vorliegende Erfindung beschreibt die Herstellung und den Gebrauch einer neuen Ionenaustauschgruppe für die Flüssigkeitschromatographie.

Die Erfindung basiert auf der Bildung von Borsäureestern aus Borsäure und vicinalen Diolverbindungen. Dabei entstehen stabile Alkoxosäuren, die wesentlich acider sind als die Borsäure selbst. Auf dieser an sich bekannten Reaktionsfolge beruhen Verfahren zur Konstitutionsermittlung von hydroxylgruppenhaltigen Verbindungen, z.B. der Zucker. Weiterhin wird diese Reaktion bei der chromatographischen Abtrennung von glykosylierten Proteinen benutzt: Ein Boronsäurederivat wird kovalent in eine Matrix gebunden. Enthält der Analyt Diolgruppierungen in cis-Konfiguration, so werden diese Moleküle reversibel gebunden und in der Regel retardiert. Bei diesem chromatographischen Verfahren sind die Stabilitätsanforderungen an die Borsäure-Diol-Komplexe gering. Die sterisch notwendige Anordnung der Hydroxylgruppen, die für die Bildung des Borsäurekomplexes notwendig ist, ist leicht erfüllt, da die diolhaltige Verbindungen frei beweglich in Lösung vorliegen. Diese Boronsäurekomplexe sind ungeeignet für die Ionenaustauschchromatographie.

Es war deswegen überraschend festzustellen, daß stabile Borsäurekomplexe gebildet werden, wenn man eine borsäure- oder borathaltige Lösung auf einen chromatographischen Träger einwirken läßt, der vicinale Diolgruppen enthält. Die resultierenden negativ geladenen Komplexe erwiesen sich in Gegenwart von Spuren von Borsäure als so stabil, daß sie als Kationenaustauscherzentren für die Chromatographie geeignet sind. Dieser Befund ist besonders unerwartet, da Borsäure-Diol-Komplexe, wie bereits erläutert, lange bekannt sind, und da diese Komplexe, soweit sie trägergebundene Boronsäure enthalten, ungeeignet als Träger für die Ionenaustauschchromatographie sind.

Gegenstand der Erfindung sind somit Kationenaustauscher für die Flüssigkeitschromatographie, dadurch gekennzeichnet, daß Borsäure in einer hydroxylgruppenhaltigen Matrix komplexiert ist. Im folgenden wird unter dem Begriff "Borsäure" stets Borsäure und/oder ihre Salze verstanden. Geeignete hydroxylgruppenhaltige Matrices sind dem Fachmann als stationäre Phasen für die Chromatographie bekannt. Dazu gehören Dextrane und Agarosen, besonders deren vernetzte Derivate, weiterhin Zellulose, Chitin und hydroxylgruppenhaltige Poly-(meth)-acrylsäurederivate. Dazu gehören weiterhin auch anorganische Träger mit hydroxylhaltigen Substituenten wie z.B. diolsubstituiertes Kieselgel, Glas, Siliziumkarbid. Besonders bevorzugt sind hydroxylgruppenhaltige Kieselgelderivate, insbesondere Kieselgele, die mit 2,3-Dihydroxypropylgruppen, mit Gluconsäureamid, mit Mono-, Oligo- oder Polysacchariden substituiert sind.

Gegenstand der Erfindung sind weiterhin Verfahren zur Herstellung einer stationäre Phase für die Ionenaustauschchromatographie, dadurch gekennzeichnet, daß ein hydroxylgruppenhaltiges Trägermaterial mit einer Lösung behandelt wird, die Borsäure enthält. Geeignete Trägermaterialien sind im vorgehenden bereits genannt. Erfindungsgemäß läßt man die Borsäure in einer wäßrigen Lösung, die zusätzlich Pufferionen und/oder Neutralsalze enthalten kann, auf das Trägermaterial einwirken. Bevorzugt wird dabei ein pH zwischen 5,5 und 9,5 eingestellt. Die Borsäure wird bevorzugt in einer Konzentration von 50 - 300 mMol/l eingesetzt. Die Variation der Borsäurekonzentration erlaubt es, die Bindungskapazität an das Trennproblem anzupassen. Da die Bildung der Borsäure-Diol-Komplexe reversibel ist, können poröse diolhaltige chromatographische Trägermaterialien wahlweise für Gelpermeationschromatographie und für Ionenaustauchchromatographie benutzt werden.

Gegenstand der Erfindung sind Verfahren zur Trennung von kationischen Substanzen durch Ionenaustauschchromatographie, wobei diolgruppenhaltige stationäre Phasen verwendet werden, die Borsäure komplexiert enthalten. Die Grundzüge der Trennung kationischer Substanzen mittels Ionenaustauschchromatographie sind dem Fachmann bekannt: Das Substanzgemisch wird in einer gepufferten wäßrigen Lösung, die zusätzlich noch Neutralsalze, wie z.B. NaCl, KCl oder $Na_2SO_4$, enthalten kann, auf die Trennsäule aufgetragen. Geeignete Puffersysteme sind beispielsweise Natrium- und/oder Kaliumphosphat, Tris, zwitterionische Puffer, wie z.B. HEPES (N-2-Hydroxyethylpiperazin-N'-2-ethansulfonsäure), und auch Borat. Soweit nicht Boratpuffer eingesetzt wird, wird bevorzugt mit einem geringen (d.h. 1-50 mMol/l) Borsäurezusatz im Puffer gearbeitet. Der pH der Pufferlösung richtet sich nach den Dissoziationskonstanten der zu trennenden Substanzen, d.h. nach deren isoelektrischen Punkten, und liegt bevorzugt zwischen 5,5 und 9,5. Übliche Pufferkonzentrationen sind 10-100 mMol/l. Die chromatographische Trennung erfolgt entweder isokratisch, d.h. unter den Auftragebedingungen, oder bevorzugt durch Gradientenelution. Bei der Gradientenelution wird die Neutralsalzkonzentration bis typischerweise 0,5-1 Mol/l erhöht und/oder der pH verändert. Für die Gradientenelution kann auch ein mit Wasser mischbares organisches Lösungsmittel benutzt werden. Geeignet sind beispielsweise Tetrahydrofuran, Methanol oder Acetonitril. Der Gradient erstreckt sich von 0 bis 70, bevorzugterweise 0 bis 50, Volumenprozent des organischen Lösungsmittels.

Gegenstand der Erfindung sind außerdem Verfahren zur Bestimmung der Diolbelegung einer stationären Phase. Dazu wird zunächst die stationäre Phase mit Borsäure komplexiert. Anschließend wird die Bindungskapazität der entstehenden Ionenaustauscherphase bestimmt, indem man eine Lösung, die einen geeigneten Probeanalyten (z.B. Lysozym) enthält, auf die Säule aufträgt, bis der Analyt im Eluat erscheint. Dabei werden die chromatographischen Bedingungen so gewählt, daß der Probeanalyt am Ionenaustauschträger gebunden wird. Im Gegensatz zu bisher üblichen Analyseverfahren, z.B. der Elementaranalyse oder der Periodattitration, ist dieses Verfahren zerstörungsfrei, da die Borsäure mit diolhaltigen, z.B. glyzerinhaltigen, Lösungen wieder aus der stationären Phase ausgewaschen werden kann.

Gegenstand der Erfindung sind schließlich Verfahren zur Strukturermittlung von hydroxylgruppenhaltigen stationären Phasen, dadurch gekennzeichnet, daß die stationäre Phase mit Borsäure in Verbindung gebracht wird. Bei diesen Verfahren wird das Elutionsverhalten eines Probeanalyten, z.B. Lysozym, in Gegenwart und in Abwesenheit von Borsäure untersucht: Nur wenn vicinale Diolgruppierungen vorliegen, unterscheidet sich das Elutionsverhalten.

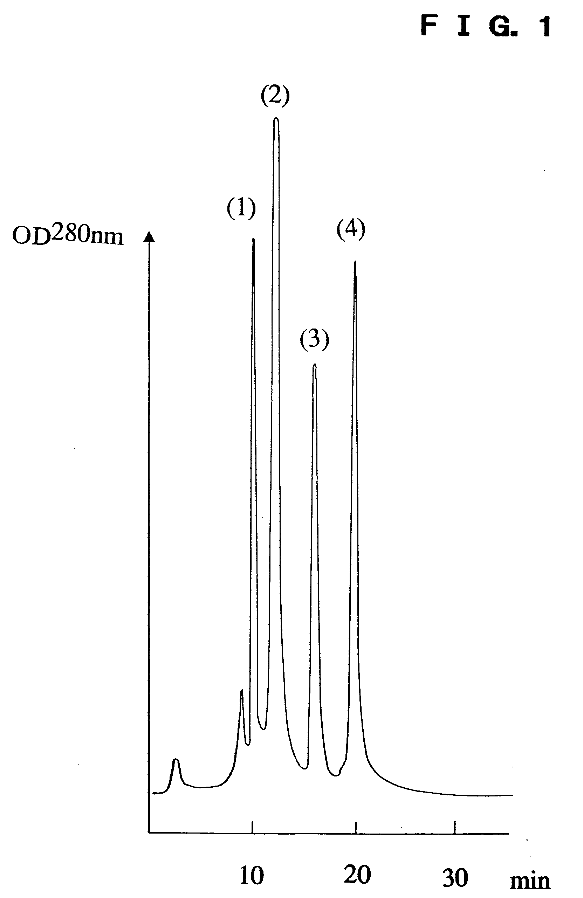

Figur 1 stellt beispielhaft ein Elutionsdiagramm dar (Einzelheiten siehe Beispiel 9).

**Beispiele**

Die folgenden Beispiele sollen die vorliegende Erfindung erläutern, ohne ihren Umfang einzuschränken. Soweit nicht anders angegeben, wurden die Versuche in einer Säule 50 x 10 mm bei einer Durchflußgeschwindigkeit von 0,5 ml/min ausgeführt.

Beispiel 1: Herstellung eines Kationenaustauschers (basierend auf einem DIOL-modifizierten Kieselgel)

Durch eine Säule, gefüllt mit LiChrospher[R] 100 DIOL 5 $\mu$m (sphärisches Kieselgel mit 10 nm mittlerer Porenweite und mittlerem Partikeldurchmesser von 5 $\mu$m, substituiert mit 2,3-Dihydroxypropylresten) wird eine Borsäurelösung (0,1 Mol/l Borsäure, eingestellt auf pH 7,5 mit NaOH) gepumpt, bis die Leitfähigkeit sich beim Durchfluß nicht mehr verändert (1 Stunde). Anschließend wird die Säule mit dem vorgesehenen (siehe Anwendungsbeispiele) Auftragemedium äquilibriert.

Beispiel 2: Herstellung eines Kationenaustauschers (basierend auf einem mit Gluconsäureamid modifizierten Kieselgel)

Durch eine Säule, gefüllt mit LiChrospher[R] 100 5 $\mu$m (sphärisches Kieselgel mit 10 nm mittlerer Porenweite und mittlerem Partikeldurchmesser von 5 $\mu$m), das mit Gluconsäureamid substituiert ist, wird, wie in Beispiel 1 beschrieben, eine Borsäurelösung gepumpt. Die weiteren Vorbereitungsschritte sind mit denen in Beispiel 1 identisch.

Beispiel 3: Herstellung eines Kationenaustauschers (basierend auf einem hydroxylgruppenhaltigen Polymethacrylsäurederivat)

Durch eine Säule, gefüllt mit Fractogel[R] TSK-HW 40 (S) (einem porösen Mischpolymerisat aus Oligoethylenglycolglycidylmethacrylat und Pentaerythritdimethacrylat, dessen sphärische Partikel Durchmesser von 25-40 $\mu$m aufweisen), wird, wie in Beispiel 1 beschrieben, eine Borsäurelösung gepumpt. Die weiteren Vorbereitungsschritte sind mit denen in Beispiel 1 identisch.

Beispiel 4: Bestimmung der Bindungskapazität

Die Säule, gefüllt mit dem Sorbens, das untersucht werden soll, wird mit Borsäurelösung (0,1 Mol/l, mit NaOH eingestellt auf pH 7,5) äquilibriert. Anschließend wird eine Lösung von Lysozym aus Eiklar (10 mg/ml) in derselben Borsäurelösung über die Säule gepumpt (0,5 ml/min), bis Protein im Eluat erscheint (Messung der optischen Dichte bei 280 nm). Aus der bis zu diesem Zeitpunkt aufgetragenen Flüssigkeitsmenge wird die Säulenkapazität (bezogen auf das Gelvolumen) berechnet.

Für die in den Beispielen 1 - 3 beschriebenen Säulen wurden folgende Bindungskapazitäten bestimmt:

| Beispiel | Material | Bindungskapazität (mg Lysozym/ml Gel) |
|---|---|---|
| 1 | DIOL | 38,2 |
| 2 | Gluconsäureamid | 145 |
| 3 | Fractogel[R] | 26,1 |

Beispiel 5: Variation der Bindungskapazität mittels Veränderung der Borsäurekonzentration

Eine Säule, gefüllt mit Bio GPC-DIOL 250 (sphärisches Kieselgel mit 25 nm mittlerer Porenweite und mittlerem Partikeldurchmesser von 5 $\mu$m, substituiert mit 2,3-Dihydroxypropylresten), wird entsprechend Beispiel 1 vorbereitet. Die Borsäurekonzentration wird jedoch variiert. Anschließend wird, wie in Beispiel 4 beschrieben, die Bindungskapazität bestimmt:

| Borsäurekonzentration (mMol/l) | Bindungskapazität (mg Lysozym/ml Gel) |
|---|---|
| 50 | 28,7 |
| 100 | 57,7 |
| 200 | 64,5 |
| 300 | 73,3 |

Beispiel 6: Stabilität der Borsäure-Diol-Komplexphase

Verwendet wird eine Säule, die entsprechend Beispiel 1 vorbereitet wird (Borsäurekonzentration 100 mMol/l), und die mit $NaH_2PO_4$-Puffer (20 mMol/l;pH 7,5; 1 mMol/l $H_3BO_3$) äquilibriert wird. 200 $\mu$l einer Lösung, die Chymotrypsinogen (4 mg/ml) und Cytochrom C (4 mg/ml) in demselben Puffer enthält, wird aufgetragen und in einem linearen NaCl-Gradienten von 0 bis 0.2 Mol/l NaCl (im obigen Phosphatpuffer; Dauer des Gradienten 20 min.) eluiert. Anschließend wird die Säule wieder mit dem Phosphatpuffer äquilibriert, und anschließend derselbe Puffer durch die Säule gepumpt (Dauer zwei Stunden). Danach wird nochmals eine Probe aufgetragen und aufgetrennt. Es werden folgende Elutionszeiten beobachtet (min):

| Lauf: | 1 | 2 | 3 | 4 |
|---|---|---|---|---|
| Substanz | | | | |
| Chymotrypsinogen | 2,80 | 2,78 | 2,76 | 2,64 |
| Cytochrom C | 5,62 | 5,60 | 5,53 | 5,52 |

Folglich ist bei sehr geringen Borsäurekonzentrationen im Puffer der Borsäure-DIOL-Komplex stabil genug, um mehrmalige Säulenbenutzung zuzulassen.

Beispiel 7: Trennbeispiele A, B und C

Verwendet wird eine Säule, die entsprechend Beispiel 5 vorbereitet wird (Borsäurekonzentration 100 mMol/l), und die mit verschiedenen Elutionspuffern äquilibriert wird. 200 $\mu$l einer Lösung, die Chymotrypsinogen (4 mg/ml), Cytochrom C (4 mg/ml) und Lysozym (4 mg/ml) in jeweils demselben Puffer enthält, wird aufgetragen und in einem linearen NaCl-Gradienten von 0 bis 0,2 Mol/l NaCl (im obigen Puffer; Dauer des Gradienten 20 min.) eluiert.

| Trennbeispiel: | A | B | C |
|---|---|---|---|
| Puffer: 50 mMol/l | TRIS x HCl | HEPES | $NaH_2PO_4$ . |
| mit 100 mMol/l $H_3BO_3$ . | | | |
| pH 8,0 | | | |
| Elutionszeit (min): | | | |
| Chymotrypsinogen | 11,16 | 12,19 | 4,18 |
| Cytochrom C | 15,10 | 16,23 | 6,82 |
| Lysozym | 18,39 | 19,02 | 11,62 |

Beispiel 8: Trennbeispiel D

Verwendet wird eine Säule, die entsprechend Beispiel 5 vorbereitet wird (Borsäurekonzentration 100 mMol/l), und die mit Borsäurelösung (100 mMol/l; pH 5,5) als Elutionspuffer äquilibriert wird. 200 $\mu$l einer Lösung, die Myoglobin (4 mg/ml) und $\alpha$-Chymotrypsin(4 mg/ml) in demselben Puffer enthält, wird aufgetragen und in einem linearen NaCl-Gradienten von 0 bis 0,2 Mol/l NaCl (im obigen Puffer; Dauer des Gradienten 20 min.) eluiert. Es werden folgende Elutionszeiten (min) ermittelt:

| Myoglobin | 8,51 |
|---|---|
| $\alpha$-Chymotrypsin | 10,55 |

Beispiel 9: Trennbeispiel E

Verwendet wird eine Säule, die entsprechend Beispiel 5 vorbereitet wird (Borsäurekonzentration 100 mMol/l), und die mit Borsäurelösung (100 mMol/l pH 7,5) als Elutionspuffer äquilibriert wird. 200 $\mu$l einer Lösung, die Chymotrypsinogen (4 mg/l), Ribonuklease (10 mg/ml), Cytochrom C (4 mg/ml) und Lysozym (4 mg/ml) in demselben Puffer enthält, wird aufgetragen und in einem linearen NaCl-Gradienten von 0 bis 0,2 Mol/l NaCl (im obigen Puffer; Dauer des Gradienten 20 min.) eluiert. Es werden folgende Elutionszeiten (min) ermittelt:

| (1) Chymotrypsinogen | 9,90 |
|---|---|
| (2) Ribonuklease | 12,11 |
| (3) Cytochrom C | 15,80 |
| (4) Lysozym | 19,72 |

Das Elutionsdiagramm ist in Figur 1 dargestellt.

Beispiel 10: Trennbeispiel F

Verwendet wird eine Säule, die entsprechend Beispiel 5 vorbereitet wird (Borsäurekonzentration 100 mmol/l), und die mit 50 mmol/l Phosphatpuffer und 100 mmol/l Borsäure, pH 7,5 als Elutionspuffer äquilibriert wird.

200 $\mu$l einer Lösung, die Ribonuclease (12 mg/ml), Chymotrypsinogen (4 mg/ml), Cytochrom C (4 mg/ml) und Lysozym (4 mg/ml) in demselben Puffer enthält, wird aufgetragen und in einem linearen Gradienten von 0 % nach 50 % Tetrahydrofuran (THF) in obigem Puffer in 20 Minuten eluiert.

Das Experiment wird mit Methanol und mit Acetonitril jeweils anstelle von THF wiederholt.

Es werden folgende Elutionszeiten (min) ermittelt:

|  | THF | Methanol | Acetonitril |
|---|---|---|---|
| Ribonuclease | 3,44 | 3,36 | nicht bestimmt |
| Chymotrypsinogen | 4,10 | 4,01 | 3,92 |
| Cytochrom C | 6,68 | 6,55 | 6,04 |
| Lysozym | 10,96 | 14,72 | 12,18 |

**Beispiel 11: Trennbeispiel G**

Verwendet wird eine Säule, die ein mit $\beta$-Cyclodextrin modifiziertes Gel enthält, und die entsprechend Beispiel 5 vorbereitet wird (Borsäurekonzentration 100 mmol/l). Die Säule wird mit 100 mmol/l Na-Borat, pH 7,5 als Elutionspuffer äquilibriert.

Danach werden 200 $\mu$l einer Lösung, die Ribonuclease (12 mg/ml), Cytochrom C (4 mg/ml) und Lysozym (4 mg/ml) in demselben Puffer enthält, aufgetragen und in einem linearen NaCl-Gradienten von 0 nach 0,4 mol/l in obigem Puffer in 40 Minuten eluiert.

Es werden folgende Elutionszeiten (min) ermittelt:

| (1) Ribonuclease | 23,66 |
|---|---|
| (2) Cytochrom C | 25,67 |
| (3) Lysozym | 30,27 |

**Beispiel 12: Herstellung eines Kationenaustauschers (basierend auf dem Borsäurekomplex eines Kieselgels, das mit diolsubstituierten Methacrylatpolymeren modifiziert ist)**

Ein Trägermaterial auf Kieselgelbasis (LiChroprep[R]; 15-25 $\mu$m Partikeldurchmesser; 80 nm Porenweite), welches mit epoxidgruppenhaltigen linearen Methacrylatpolymeren modifiziert ist, wird eine Stunde mit 5 %iger Schwefelsäure bei 90°Cbehandelt. Anschließend wird, wie in Beispiel 4 beschrieben, der Kationenaustauscher hergestellt und dessen Bindungskapazität bestimmt; das Material bindet 31,2 mg Lysozym/ml Gel.

**Patentansprüche**

1.  Kationenaustauscher für die Flüssigkeitschromatographie, dadurch gekennzeichnet, daß Borsäure in einer hydroxylgruppenhaltigen Matrix komplexiert ist.

2.  Verfahren zur Trennung von kationischen Substanzen durch Ionenaustauschchromatographie, dadurch gekennzeichnet, daß ein Kationenaustauscher nach Anspruch 1 verwendet wird.

3.  Verfahren zur Bestimmung der Diolbelegung einer stationären Phase, dadurch gekennzeichnet, daß die stationäre Phase mit Borsäure komplexiert wird.

4.  Verfahren zur Strukturermittlung von hydroxylgruppenhaltigen stationären Phasen, dadurch gekennzeichnet, daß die stationäre Phase mit einer Lösung behandelt wird, die Borsäure enthält.

5.  Verfahren zur Herstellung einer stationären Phase für die Ionenaustauschchromatographie, dadurch gekennzeichnet, daß eine stationäre hydroxylgruppenhaltige Phase mit einer Lösung behandelt wird, die Borsäure enthält.

# F I G. 1

Europäisches
Patentamt

**EUROPÄISCHER RECHERCHENBERICHT**

Nummer der Anmeldung

EP 92116987.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | US - A - 5 002 991 (HAMANAKA et al.) * Spalte 2, Zeile 45 - Spalte 3, Zeile 50; Spalte 5, Zeile 55 - Spalte 7, Zeile 12; Anspruch 1 * -- | 1-5 | G 01 N 30/96 B 01 J 39/08 B 01 J 45/00 |
| A | FRESENIUS' ZEITSCHRIFT FÜR ANALYTISCHE CHEMIE, 205. Band, 1964; Springer-Verlag; J.F. Bergmann, Mch; P.J. SCHORN "Auswahl der stationären Phase für die Dünnschicht-Chromatographie" * Seiten 298-308; insbes. Seite 307, 3. Absatz; Tabelle 2 * -- | 1 | |
| A | US - A - 4 507 390 (HORIUCHI et al.) * Spalte 1, Zeile 53 - Spalte 2, Zeile 2; Spalte 4, Zeilen 4-40; Ansprüche 1,2,4,5,7,8 * ---- | 1-5 | |

RECHERCHIERTE SACHGEBIETE (Int. Cl.⁵)

G 01 N
B 01 J

Der vorliegende Recherchenbericht wurde für alle Patentansprüche erstellt.

| Recherchenort | Abschlußdatum der Recherche | Prüfer |
|---|---|---|
| WIEN | 22-12-1992 | TENGLER |